Europäisches Patentamt

European Patent Office

Office européen des brevets

(11) Numéro de publication: **0 326 769 B1**

(12) **FASCICULE DE BREVET EUROPEEN**

(45) Date de publication de fascicule du brevet: **02.09.92**  (51) Int. Cl.⁵: **B25F 1/00**, B60Q 1/52

(21) Numéro de dépôt: **88403240.0**

(22) Date de dépôt: **19.12.88**

(54) **Outil multifonctions avec éclairage de sécurité incorporé permettant l'autodésenclavement d'un accidenté.**

(30) Priorité: **29.01.88 FR 8801064**

(43) Date de publication de la demande:
**09.08.89 Bulletin  89/32**

(45) Mention de la délivrance du brevet:
**02.09.92 Bulletin  92/36**

(84) Etats contractants désignés:
**AT BE CH DE ES FR GB GR IT LI LU NL SE**

(73) Titulaire: **Nivet, Bernard**
**16 Chemin des Clos**
**F-91620 La Ville du Bois(FR)**

(72) Inventeur: **Nivet, Bernard**
**16 Chemin des Clos**
**F-91620 La Ville du Bois(FR)**

(56) Documents cités:
**EP-A- 0 246 436**     **WO-A-84/01917**
**BE-A- 623 917**       **BE-A- 629 843**
**DE-A- 1 922 162**     **DE-A- 3 613 840**
**FR-A- 2 241 744**     **GB-A- 438 514**
**GB-A- 1 058 268**     **GB-A- 2 077 525**
**US-A- 3 825 740**     **US-A- 4 262 277**

**PATENT ABSTRACTS OF JAPAN, vol. 10, no.
231 (M-506)[2287], 12 août 1986, page 62 M
506; & JP-A-61 64 553 (FUJITSU TEN LTD)
02-04-1986**

**PATENT ABSTRACTS OF JAPAN, vol. 10, no.
270 (M-517)[2326], 13 septembre 1986, page
117 M 517; & JP-A-61 94 838 (OMRON TATEISI
ELECTRONICS CO.) 13-05-1986**

## Description

La présente invention concerne un outil multifonctions avec éclairage de sécurité incorporé selon le préambule de la revendication 1.

Un outil de ce type est connu de l'art antérieur, par exemple, par le document GB-A-438514.

Un mode de réalisation d'un moyen de secours mis à la disposition d'un accidenté de la route vise un organe de percussion qui, lorsqu'il est combiné à un moyen d'éclairage peut permettre l'autodésenclavement d'un accidenté de la route isolé, de nuit comme de jour.

Le dispositif d'éclairage peut, par exemple, être mis en oeuvre par l'accidenté lui même qui est alors capable d'utiliser l'outil de désenclavement mis à sa disposition et ce, sans aucun secours extérieurs.

On rappelle que les outils de désenclavement connus antérieurement comportent essentiellement : un moyen de percussion de vitre, un moyen de sectionnement de la ceinture de sécurité et un manche de préhension, tous ces éléments étant réunis et fixés sur la partie fixe du véhicule.

De tels outils étant initialement inopérants dans l'obscurité, un premier perfectionnement à consisté à leur adjoindre un moyen d'éclairage autonome incorporé qui peut être du genre à accus rechargeables sur le réseau électrique du bord et qui peuvent être logés dans le manche même de l'outil.

Lors d'accidents diurnes ou nocturnes particulièrement violents, l'accidenté peut se trouver inconscient et dans l'incapacité matérielle d'utiliser les moyens mis à sa disposition et il s'avère alors nécessaire de compléter le système initial par un dispositif complémentaire d'alerte sonore et visuelle puissant de manière à attirer de jour comme de nuit, l'attention de toute personne avoisinant l'accident.

Ce dispositif complémentaire d'alerte doit pouvoir se mettre en action indépendamment de l'accidenté, uniquement sous l'effet du choc et doit pouvoir également être arrêté par l'accidenté lui même reprenant connaissance par exemple ou bien par toute personne accourue sur les lieux de l'accident.

On peut prévoir également un dispositif antivol de l'outil et un scellé de sécurité utile lors du constat d'accident.

L'invention va être bien comprise dans la suite du texte qui va donner, à l'appui des dessins annexés, une forme de réalisation aisée à comprendre.

sur les dessins:

- la figure 1 représente en vue en perspective, l'ensemble de l'outil multifonctions selon l'invention,

- la figure 2 est un schéma explicatif des circuits électriques et électroniques de l'outil selon figure 1.

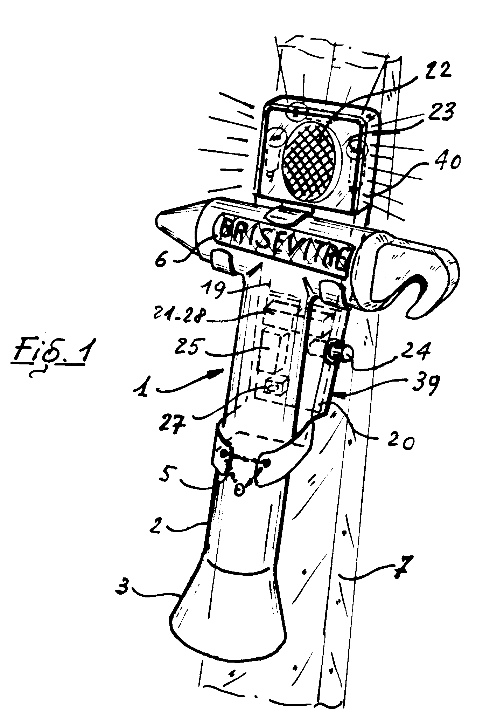

Selon la figure 1, l'outil multifonctions répéré 1 dans son ensemble, comporte: une pointe de percussion brise-vitres ( à gauche sur le dessin), une cisaille de sectionnement de la ceinture de sécurité (à droite sur le dessin), et un manche de préhension ( vers le bas sur le dessin).

Un premier perfectionnement consiste à loger dans le manche de préhension, un dispositif d'éclairage repéré 2 dans son ensemble et qui comporte extérieurement une partie optique d'allumage (connue donc non représentée) et d'éclairage repéré 3 et l'outil est fixé sur un support 39 avec clips, attaché au véhicule, tandis qu'un plombage 5 à déplombage aisé permet le contrôle visuel du dépositionnement éventuel de l'outil.

Une plaquette luminescente portant l'indication BRISEVITRE et repérée 6 peut être fixe sur l'outil 1 et être visible de tous les passagers et de l'extérieur.

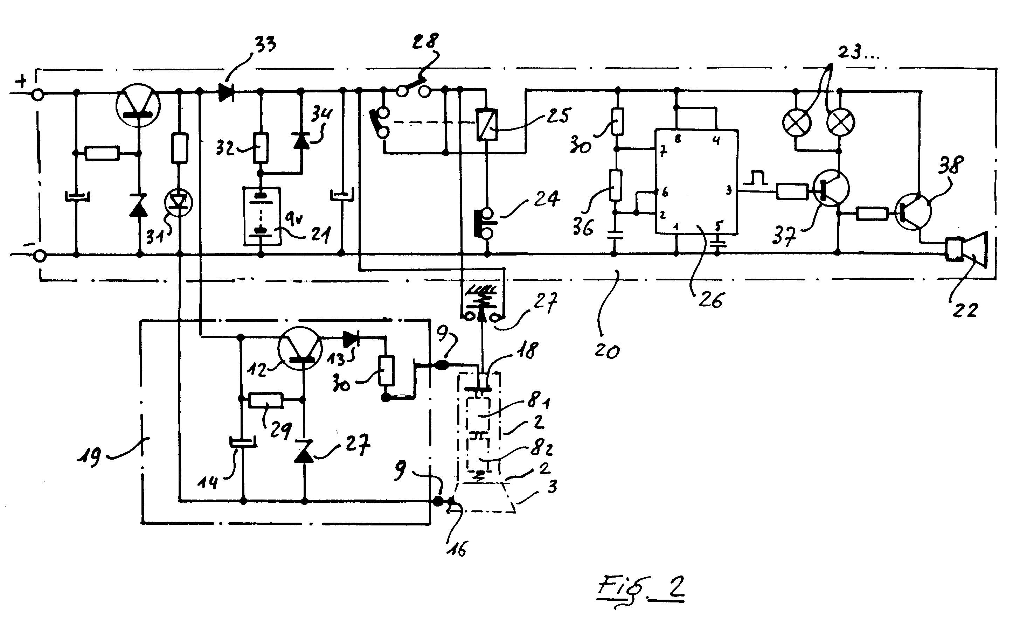

La partie électrique et électronique représentée sur la figure 2 et comportant deux parties 19 et 20 est intégrée dans le support fixe 39 lié au montant 7.

ces circuits sont du type imprimé incluant, d'une part, pour le circuit 19, des composants de limitation de charge représentés par le transistor 12, la diode ZENNER 27, un condensateur 14, deux résistances 29 et 30 tandis qu'une diode 13 empêche une décharge intempestive en cas de rupture accidentelle de la tension du bord et, d'autre part, les connexions aboutissent sur les piles rechargeables $8_1$ et $8_2$ par les contacts 16 et 18.

La partie 20 comporte essentiellement une alarme sonore 22, une alarme visuelle à lampe 23...., un relais 25, un bouton interrupteur 24, une batterie rechargeable 21 (9v), un multivibrateur monostable 26 ainsi que les composants usuellement utilisés en la matière.

La tension du bord, contrôlée par une diode LED 31 arrive aux bornes de la batterie 21 dont le courant de charge est limité par la résistance 32. Une diode 33 est prévue afin d'empêcher le déchargement de la batterie sur le réseau et qu'une autre diode 34 empêche une brusque chute de tension intempestive aux bornes de la résistance 32 en assurant une tension convenable sur le circuit.

En amont, le système de la batterie rechargeable 21 est identique à celui de régulation des piles rechargeables $8_1$-$8_2$ avec un transistor, une ZENNER, une résistance, un condensateur.

Les systèmes d'alarmes sonore et visuel sont commandés depuis la fermeture, soit du détecteur de choc 28, soit depuis la fermeture du contact antivol 27; ledit détecteur de choc étant omnidirec-

tionnel.

Les piles rechargeables $8^1$-$8^2$ sont reliées au circuit par les contacts à pression 9.

Lors de la fermeture du contact de détection de chocs 28, le relais 25 est sous tension fermant son contact d'auto-alimentation et mettant sous tension les alarmes.

Un résultat identique est obtenu par la fermeture du contact antivol 27 qui se ferme mécaniquement lorsque l'outil est enlevé de son support.

l'interrupteur 24 peut permettre à tout instant d'arrêter le fonctionnement des alarmes.

Pour des raisons de limitation de consommation, les alarmes fonctionnent alternativement ce qui est obtenu par le pilotage du multivibrateur 26 associé à une électronique comportant essentiellement: deux résistances 30 et 36 et un condensateur permettant le réglage en fréquence et le réglage du rapport cyclique (environ une seconde) et les transistors 37,38 déterminent le sens de passage du courant.

Les deux circuits 19 et 20 sont logés à l'intérieur du support 39 qui peut être une simple tôle pliée ou un moulage plastique équivalent.

les ampoules peuvent être du type "flash" et disposées à l'intérieur d'un bandeau transparent 40.

L'optique 3 mise en action par simple rotation est focalisante permettant, soit un éclairage spatial,soit un éclairage longue portée pouvant atteindre 400 m.

## Revendications

1. Outil multifonctions avec éclairage de sécurité incorporé permettant l'autodésenclavement d'un accidenté caractérisé en ce qu'il comporte:
   - un ensemble (1) sur un support (39) lié au montant (7) d'un véhicule et comprenant d'un côté, une pointe brise-vitre, d'un autre côté une cisaille de sectionnement de la ceinture de sécurité et vers le bas un manche de préhension à éclairage incorporé (2),
   - à l'intérieur du support (39), un circuit électrique et électronique supportés sur deux circuits imprimés (19,20); le premier (19) incluant les composants de limitation de charge des piles rechargeables ($8_1$,$8_2$) est constitué par un transistor (12), une diode ZENER (27), un condensateur (14), deux résistances (29,30) tandis qu'une diode (13) empêche la décharge intempestive en cas de rupture de la tension du bord et que des contacts (9) assurent le passage du courant vers lesdites piles de la partie à éclairage incorporé (2) de l'outil (1) en complèment des contacts (16,18) ; et que le deuxième circuit (20) inclut: une alarme sonore (22), une alarme visuelle (23), un relais (25) réglé en autocollage, un bouton interrupteur (24), une batterie rechargeable (21), un multivibrateur monostable (26) réglé par les résistances (30,36) avec les composants usuels de telle sorte que la tension du bord contrôlé par une diode LED (31) arrive aux bornes de la batterie rechargeable (21) dont le courant limité et réglé par une résistance (32) et des diodes (33,34) est assuré par un limiteur de charge comportant des composants identiques à celui de la torche (2); lesdits systèmes d'alarme (22,23) dont l'action est alternative pour des raisons d'économie d'énergie étant commandés soit sous l'effet d'un détecteur de choc omnidirectionnel (28) soit par l'action d'un contact antivol (27) tandis qu'un interrupteur (24) peut permettre d'arrêter le déclenchement de l'alarme à chaque instant.

2. Outil multifonctions avec éclairage de sécurité incorporé permettant l'autodésenclavement d'un accidenté selon la revendication 1 caractérisé en ce que le support (39) peut être une simple tôle pliée ou un moulage plastique équivalent.

## Claims

1. Multi-function tool with incorporated safety light allowing self-disengaging of an injured person, with the following characteristics:
   - a set (1) on a support (39) fixed to the inside frame (7) of a vehicle and including on one side a window-breaking peak, on the other side a safety belt shear, and at the bottom a prehension handle with incorporated light (2).
   - inside the support (39), an electric and electronic circuit supported on 2 printed circuits (19/20), the first one (19) including the load limit compounds of the rechargeable batteries ($8_1$,$8_2$) is constituted by a transistor (12), a Zener diode (27), a condenser (14), 2 resistances (29,30), while a diode (13) prevents sudden discharge in case of battery voltage drop and contacts (9) ensure the current access towards the said batteries of the incorporated light part (2) of the tool (1) in addition to contacts (16/18), and the second circuit (20) includes : a buzzer (22), a flash (23), a relay (25) adjusted in self-sticking, a switch button (24), a rechargeable battery (21), a monostable multi-vibrator (26) adjusted by resistances (30-36) with the usual compounds so that the battery tension controlled by a Led diode (31) arrives to the terminal of the rechargeable car-battery (21) of which current, limited and adjusted by a resistance (32) and diodes (33-34), is ensured by a load limit device including similar compounds to those of the torch (2) ; the said alarm systems (22-23) of which action is alternative for energy economical reasons being driven either by means of an omni-directional shock detector (28) or a thief-proof contact (27) while a switch button (24) may stop release of the alarm at any time.

2.  Multiple-function tool with incorporated safety light allowing self-disengagement of an injured person according to claim n° 1 characterized by the fact that the support (39) can be a simple formed plate or a similar plastic moulding.

**Patentansprüche**

1.  Mehrzweckgerät mit eingebauter Sicherheitsbeleuchtung zur Bergung von Verunglückten; dieses Gerät setzt sich wie folgt zusammen :
    - eine Halterung (39), die an der Tragvorrichtung (7) eines Fahrzeuges angebracht ist und an der sich auf einer Seite ein Scheiben-Brecheisen, auf der anderen eine Blechschere zum Aufschneiden des Sicherheitsgurtes angebracht ist. Darunter befindet sich ein Stilgriff mit eingebauter Beleuchtungs-Anlage (2);
    - innerhalb dieser Halterung (39) befinden sich je ein elektrischer und ein elektronischer Stromkreis auf 2 Kreisläufen (19,26); ersterer (19), der die Teile für die Belastungsgrenze :der aufladbaren Batterien $(8_1,8_2)$ enthält, besteht aus einem Transistor (12), einem negativen Pol "ZENER" (27), einem Elektrizitäts-Speicher (14), zwei Widerständen (29,30); ein negativer Pol (13) verhindert die unvorhergesehene Entladung im Falle einer Spannungs-Unterbrechung. Die Kontakte sichern den Stromdurchlauf zu den erwähnten Batterien der eingebauten Beleuchtungs-Anlage des Gerätes (1), und zwar zusätzlich zu den Kontakten 16,18. Der zweite Stromkreis besteht aus einer Schall- (22) und einer Sicht-Alarmanlage (23), einer regulierten selbsthaftenden Wechselstrom-Anlage (25), einem Schalter (24), einer aufladbaren Batterie (21), einem einphasigen Mehrschall-Schwinger (26) reguliert durch die Widerstände (30,36) aus den üblichen Bestandteilen wie die des Scheinwerfers (2). Die erwähnten Alarm-Systeme (22,23), deren Betätigung aus energiesparenden Gründen wechselhaft ist, werden entweder durch die Einwirkung eines in alle Richtungen ausstrahlenden Erschütterungs-Detektors (28) oder durch die Betätigung eines Sicherheits-Kontaktes (27) gesteuert, währenddess ein Schalter (24) jederzeit das Alarmsystem ausser Betrieb setzen kann.

2.  Mehrzweckgerät mit eingebauter Sicherungsbeleuchtung, mit dessen Hilfe ein Verunglückter geborgen werden kann; gemäss der Anspruchs-Forderung 1) ist es insofern bezeichnend dafür, dass die Tragvorrichtung (39) ebenfalls aus ein einfachem gebogenen Blechstück oder aus ein gleichförmigen Stück Kunststoff bestehen kann.

_Fig. 1_

Fig. 2

EP 0 326 769 B1